# EUROPEAN PATENT SPECIFICATION

(11) **EP 2 801 200 B1**
(45) Date of publication and mention of the grant of the patent: **13.03.2019**
(21) Application number: 12700324.2
(22) Date of filing: 06.01.2012
(51) Int. Cl.: H04N 13/30, H04N 13/302, H04N 13/305, H04N 13/111, H04N 13/144, H04N 13/106, H04N 13/351

(54) **DISPLAY PROCESSOR FOR 3D DISPLAY**
DISPLAY-PROZESSOR FÜR 3D-ANZEIGE
PROCESSEUR D'AFFICHAGE POUR AFFICHAGE 3D

(43) Date of publication of application: 12.11.2014
(73) Proprietor: Ultra-D Coöperatief U.A., 5657 HJ Eindhoven (NL)
(72) Inventor: BARENBRUG, Bart Gerard Bernard, 5583 CG Waalre (NL); ROELEN, Waltherus Antonius Hendrikus, 5721 MA Asten (NL)
(74) Representative: DeltaPatents B.V.
(86) International application number: PCT/EP2012/050185
(87) International publication number: WO 2013/102500

(56) References cited:
- EP-A2- 0 726 482
- WO-A1-2005/091050
- WO-A2-97/02709
- US-A1- 2011 316 985

## Description

### FIELD OF THE INVENTION

The invention relates to a display processor and method for processing three-dimensional [3D] image data for display on a 3D display. The invention further relates to a 3D display, tablet device, digital photo frame and smart phone comprising said display processor, and a computer program product for performing said method.

3D displays, and in particular televisions equipped with 3D displays, are increasingly popular amongst consumers, as they provide a viewer with stereoscopic perception of depth. So-termed autostereoscopic 3D displays provide said stereoscopic perception of depth without needing the viewer to wear polarized or shutter-based glasses. For that purpose, optical components are used, such as lenticular lens arrays, which enable the display to emit a viewing cone from each given point on the 3D display, the viewing cone comprising at least a left view and a right view of a scene. This enables the viewer to see a different image with each eye when positioned accordingly within the viewing cone.

Certain autostereoscopic displays, sometimes referred to as automultiscopic displays, provide multiple views of the same scene, rather than only a left and a right view. This allows the viewer to assume multiple positions in the viewing cone, i.e., move left-right in front of the display, while still obtaining a stereoscopic perception of the scene.

However, not all positions assumed by the viewer are equally suitable for obtaining stereoscopic perception of the scene. In particular, when the display is arranged for repeating the viewing cone as a series of viewing cones, a viewer may be positioned such that, e.g., the left eye perceives an outermost right-hand view of a given viewing cone, and the right eye perceives an outermost left-hand view of an adjacent viewing cone. At such a viewing position, a viewer obtains a so-termed pseudoscopic perception of the scene, in which the scene often appears to have a depth, yet which is incorrect. Pseudoscopic perception is known to cause headaches and other symptoms of visual strain.

Moreover, at the aforementioned viewing position, the difference between both views is larger than at other viewing positions within the series of viewing cones. As a result, any visual strain is further aggravated. Said viewing position will henceforth be referred to as an *extra*-pseudoscopic viewing position, i.e., not only providing pseudoscopic viewing, but also providing a difference that corresponds to the two most differing views, e.g., a left-most and right-most one, of two adjacent viewing cones. Said viewing position is sometimes also referred to as a *super*-pseudoscopic viewing position.

### BACKGROUND OF THE INVENTION

WO 2005/091050 A1 describes a multi-view display device for displaying multiple views, the multiple views having respective viewing angles related to an object to be displayed is disclosed. The display device comprises optical means for displaying multiple viewing cones, a first one of the multiple viewing cones having an angular distribution of the views relative to the display device, and driving means for providing the optical means with sets of image data corresponding to the respective views.

The sets of image data are provided such that the angular distribution has a first part of adjacent views with increasing viewing angle and a second part of adjacent views with decreasing viewing angle and the angular distribution has a first one of the views in between a maximum view which corresponds to a maximum viewing angle and a minimum view which corresponds to a minimum viewing angle.

As a result, the aforementioned multi-view display device provides a first portion of adjacent views providing stereoscopic viewing to a viewer, and a second portion of adjacent views providing pseudoscopic viewing to the viewer. It is said that by creating some pseudoscopic images, super-pseudoscopic regions can be prevented.

US 2011/316985 A1 describes using interpolation and extrapolation to generate from a left image and a right image four views. Specifically, it is described to generate virtual view images at non-integer positions, i.e., at positions of ⅓ and 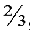 , and extrapolation to generate virtual view images at positions of -1 and 2 when the position of the left image of the input image is set to 0 and the position of the right image of the input image is set to 1 in order to obtain equal disparity distribution among the four views.

### SUMMARY OF THE INVENTION

A problem of the aforementioned multi-view display device is that the quality of the views provided to a viewer of the multi-view display device is insufficient.

It would be advantageous to have a display processor or method for enabling improved display of 3D image data on a 3D display.

To better address this concern, a first aspect of the invention provides a display processor as defined by claim 1.

In a further aspect of the invention, a 3D display is provided comprising the display processor set forth. In a further aspect of the invention, a tablet device, digital photo frame or smart phone is provided comprising the mobile display device set forth.

In a further aspect of the invention, a method is provided as defined by claim 12.

In a further aspect of the invention, a computer program product is provided comprising instructions for causing a processor system to perform the method set forth.

The aforementioned measures provide a display processor for processing 3D image data for display on a 3D display. The 3D image data is image data that provides stereoscopic viewing, i.e., enables each of the eyes of a viewer to perceive a slightly different view of a scene comprised in the image data. As a result, the viewer is provided with an impression of depth. The 3D display is a so-termed autostereoscopic multi-view display which typically comprises optical means for adjacently emitting, from any given point on the 3D display, a series of views of the 3D image data. The series of views is emitted in the form of a viewing cone originating from the 3D display, with the viewing cone being one of a series of repeated viewing cones, each respective one of the series of repeated viewing cones comprising the aforementioned series of views and being emitted by the 3D display in a different angular direction with respect to the other viewing cones.

The display processor is arranged for providing, as part of the series of views, a first portion of views which provide stereoscopic viewing of the 3D image data at multiple viewing positions in each of the viewing cones, thereby providing a stereoscopic viewing region in each of the viewing cones. Thus, at multiple viewing positions within each of the viewing cones, the viewer is able to perceive a slightly different view of the scene in the 3D image data with each of his eyes, with the difference in views providing an impression of depth. Conceptually, the views in the first portion form a series of views that correspond to the views obtained by a camera facing the scene comprised in the 3D image data and moving from left to right in front of, and relative to, said scene.

Moreover, the display processor is arranged for providing, as part of the series of views, a second portion of views which provide pseudoscopic viewing of the 3D image data at, at least, a further viewing position in each of the viewing cones, thereby providing a pseudoscopic viewing region in each of the viewing cones. Pseudoscopic viewing, also known as pseudo-stereoscopic viewing, refers to each of the eyes of a viewer perceiving a slightly different view of the scene in the 3D image data, however, with views being reversed with respect to stereoscopic viewing. Pseudoscopic viewing is obtained, for example, when a view, intended for viewing with the right eye, is viewed with the left eye, and a view, intended for viewing with the left eye, is viewed with the right eye. As a result, the viewer is provided with a reversed and thus typically unnatural impression of depth.

The second portion adjoins the first portion in the series of views. As a result, the viewer can seamlessly transition from stereoscopic viewing to pseudoscopic viewing by moving from the stereoscopic viewing region to the pseudoscopic viewing region. Necessarily, extra-pseudoscopic viewing regions are reduced or avoided, as the pseudoscopic viewing region distributes the difference or disparity between a right-most view in a given stereoscopic viewing region and a left-most view in an adjacent stereoscopic viewing region, e.g., being located in an adjacent viewing cone, across the second portion of views. Thus, by purposefully providing a pseudoscopic viewing region adjoining the stereoscopic viewing region, the otherwise perceived difference in the extra-pseudoscopic viewing position is distributed over a number of views. It is noted that said difference, and thus the associated visual strain, decreases with an increasing number of views in the second portion.

The display processor is further arranged for generating a first series of images for being emitted as the first portion of the series of views. For that purpose, the display processor is arranged for directly obtaining original images from the 3D image data. Obtaining said images may comprise, e.g., performing a view rendering of the 3D image data when the 3D image data is provided in a so-termed image+depth format, or obtaining said images from a view renderer. Obtaining said images may also comprise, e.g., performing a view synthesis of the 3D image data when the 3D image data is provided in a so-termed left+right image format, or obtaining said images from a view synthesizer. Said images may also be directly obtained from the 3D image data when the image data is provided in a multi-view format, i.e., comprises a series of views. It is noted that the term original images refers to the images each showing a different view of the scene comprised in the 3D image data, i.e., corresponding to different positions of cameras relative to the scene, with each different view of the scene being directly derived from the 3D image data.

The display processor is further arranged for deriving derived images from the original images. Here, the terms *deriving* and *derived* refer to interpolation and/or extrapolation , e.g., generating interpolated images in between the original images and/or extrapolated images next to the original images. The display processor further generates the first series of images as comprising at least the derived images. It is noted that the first series of images may, or may not, comprise one or more of the original images in addition to the derived images. The original images differ from the interpolated and/or extrapolated images in that the former are directly obtained from the 3D image data, whereas the latter are derived from the original images and thus not directly obtained from the 3D image data.

The display processor is further arranged for, in an otherwise similar manner as aforementioned, obtaining further original images from the 3D image data for generating the second series of images comprising the further original images, or obtaining further original images from the 3D image data, deriving further derived images from the further original images, and generating the second series of images comprising the further derived images and at least one of the further original images. Again, the terms *deriving* and *derived* refer to interpolation and/or extrapolation , e.g., generating interpolated images in between the further original images and/or extrapolated images next to the further original images. Moreover, in case the second series of images comprises the further derived images, the number of the first mentioned derived images is larger than the number of the further derived images relative to a total number of images in each respective series of images.

Specifically, in accordance with the independent claims, generating the stereoscopic series of images comprises obtaining original images from the 3D image data and repeating images from the original images by interpolating in between the original images using zero-order interpolation and/or extrapolating next to the original images using zero-order extrapolation, whereas generating the pseudoscopic series of images comprises obtaining further original images from the 3D image data and including the further original images in said pseudoscopic series while not including repeated images.

The present invention is partially based on a recognition that two otherwise unrelated techniques can be advantageously combined. A first technique concerns the use of interpolation and/or extrapolation to reduce the computational load when generating images for a 3D display, as obtaining original images, e.g., using view rendering or view synthesis, is typically more computational complex than obtaining interpolated and/or extrapolated images from the original images. A second technique concerns the introduction of a pseudoscopic viewing region in order to avoid, or reduce the size of, an extra-pseudoscopic viewing region. The inventors have recognized that it is desirable to obtain a smooth transition between the pseudoscopic views in the second portion of the series of views so as not to further add to the visual strain caused by pseudoscopic viewing itself. If the views comprise interpolated and/or extrapolated images, this may disturb the smooth transition between said views. Hence, when reducing the computational complexity of generating the images for being emitted as the series of views by using an interpolation and/or extrapolation to generate interpolated and/or extrapolated images, it is more desirable to apply said interpolation and/or extrapolation when generating the first series of images than when generating the second series of images.

Specifically, the display processor is arranged for deriving the derived images from the original images using a zero-order interpolation and/or extrapolation technique. The term zero-order refers to repeating an original image in order to generate the interpolated and/or extrapolated image. Repeating images involves a low computational complexity. By repeating original images, the sharpness of the original images is maintained in the interpolated and/or extrapolated images, as interpolation and/or extrapolation artifacts are avoided. Advantageously, when the 3D display exhibits optical cross-talk between adjacent views, e.g., when the 3D display is a so-termed fractional view display in which a view inherently has significant cross-talk with adjacent views, the sharpness of an image in a given view is maintained when the adjacent views comprise interpolated and/or extrapolated images being repetitions of the image in the given view.

Optionally, the display processor is arranged for deriving the further derived images from the further original images using a first- or higher-order interpolation and/or extrapolation technique. Interpolated and/or extrapolated images that are created using first- or higher-order interpolation and/or extrapolation techniques typically provide smoother transitions between further original images than interpolated and/or extrapolated images that are created using zero-order interpolation. Advantageously, when the second series of images comprises interpolated and/or extrapolated images, a smooth transition between the pseudoscopic views in the second portion of the series of views is maintained despite the use of interpolation and/or extrapolation.

Optionally, the display processor is arranged for obtaining the further original images by selecting all or a subset of the original images. The computational complexity of obtaining the further original images can be reduced by reusing a subset, or all of the original images from the first series of images in the second series of images. Advantageously, a computational complexity due to performing view rendering or view synthesis is reduced as at least some of the original images are reused in the second series of images.

Optionally, the second series of images consists of all or the subset of the original images. Thus, it is not needed to separately obtain any original images from the 3D image data, as all of the further original images are obtained from the original images. Advantageously, it is not needed to perform any view rendering or view synthesis specifically for obtaining the further original images from the 3D image data.

Optionally, the display processor is arranged for blurring the second series of images. By blurring the second series of images, a smoother transition between the pseudoscopic views in the second portion of the series of views is obtained as the sharpness of said images is reduced, thus making transitions between views less noticeable. Advantageously, interpolation and/or extrapolation artifacts in interpolated and/or extrapolated images are reduced by the blurring.

Optionally, the display processor is arranged for blurring the second series of images by applying a spatial low-pass filter to individual ones of the second series of images, or by averaging multiple ones of the second series of images. A spatial low-pass filter blurs images individually, i.e., pixels of other images are not taken into account, whereas averaging multiple images blurs images by averaging the pixels across the multiple images. Both techniques are well-suited for blurring the second series of images.

Optionally, the first adjacent subset of the series of views and the second portion of the series of views together form the series of views. The pseudoscopic viewing region provided in each of the repeated viewing cones thus always forms a transition between the stereoscopic viewing regions of neighboring viewing cones.

Optionally, the 3D display is arranged for emitting the series of views as a series of fractional views with each one of the series of fractional views exhibiting optical cross-talk with O fractional adjacent views. The 3D display is therefore a so-termed fractional view display. Such displays are typically referred to as a *P*/*Q* display, with *P* indicating the number of fractional views provided in each respective one of the series of repeated viewing cones, and *Q* indicating the number of fractional views that are visible to the user when viewing a single one of said fractional views due to the optical cross-talk. It is noted that *Q* equals *O* + *1*, e.g., when the fractional view display is a *20*/*3* display, a viewer will perceive, when viewing a given fractional view, the two adjacent fractional views as well, resulting in the viewer perceiving a total of three fractional views, i.e., *O* = *2*, *Q* = *3.*

Optionally, the display processor is arranged for (i) generating the first series of images by deriving *O* derived images for each of the original images using a zero-order interpolation and/or extrapolation technique, and (ii) generating the second series of images comprising no further derived images. Hence, for each original image, *O* interpolated and/or extrapolated images are generated by means of repetition, with *O* being equal to the number of adjacent fractional views exhibiting optical cross-talk with each one of the series of fractional views. As a consequence, the viewer may, when perceiving an original image in one of the fractional views, be subject to the optical cross-talk of at least one adjacent fractional view that comprises a repetition of the original image. Hence, the viewer will perceive less optical cross-talk. The optical cross-talk may also be of the *O* adjacent fractional views each comprising said repeated image. Hence, the viewer will perceive no, or an insignificant amount of crosstalk. The use of a zero-order technique thus results in less optical cross-talk being visible, and the images in the first series of fractional views appearing to be, on average, sharper. The viewer will therefore obtain an improved image quality in the stereoscopic viewing region. Moreover, the second series of images does not comprise any interpolated and/or extrapolated images. Thus, a smooth transition between fractional views in the pseudoscopic viewing region is obtained. In addition, the optical cross-talk between adjacent fractional views further increases said smoothness, as adjacent fractional views blend into each other.

Optionally, the first series of images comprises substantially *O*+*1* times the total number of images of the second series of images. For example, for a 3D display in which each of the views exhibits optical cross-talk with two adjacent views, i.e., O is two, the first series of images comprises three, i.e., two plus one, times as many images as the second series of images. Consequently, the first portion of the series of views is three times as large as the second portion of the series of views in each of one of the series of repeated viewing cones. Advantageously, a transition between adjacent but different views is substantially equal in each of the first portion and the second portion of views. Advantageously, a same amount of perceived depth may be obtained in each of said portions of views, instead of, e.g., the second portion of views providing a larger perceived depth than the first portion of views.

The above measures therefore have the effect that the optical cross-talk between adjacent fractional views is reduced in the stereoscopic viewing region by repeating original images, and in particular, by repeating original images by the same number as the number of adjacent fractional views exhibiting optical cross-talk with each one of the series of fractional views. Moreover, no repetition is employed, i.e., the optical cross-talk is not reduced, in the pseudoscopic viewing region in order to increase the smoothness of transition between the fractional views in the pseudoscopic viewing region.

Optionally, the first portion of the series of views is at least twice as large as the second portion of the series of views. As such, a stereoscopic viewing region is provided that is at least twice as large as the pseudoscopic viewing region.

It will be appreciated by those skilled in the art that two or more of the above-mentioned embodiments, implementations, and/or aspects of the invention may be combined in any way deemed useful. Modifications and variations of the 3D display, tablet device, digital photo frame, smart phone, method and/or computer program product, that correspond to the described modifications and variations of the display processor, can be carried out by a person skilled in the art on the basis of the present description. The invention is defined in the independent claims. Advantageous options are defined in the dependent claims.

### BRIEF DESCRIPTION OF THE DRAWINGS

These and other aspects of the invention are apparent from and will be elucidated with reference to the embodiments described hereinafter. In the drawings,
Fig. 1 shows a display processor according to the present invention and a 3D display for adjacently emitting a series of views in each of a series of viewing cones;
Fig. 2 shows a schematic representation of a viewpoint provided by each of the series of views as a function of a viewing position in the series of viewing cones;
Fig. 3 shows a schematic representation of the viewpoints provided by a series of views of a single viewing cone, the series of views providing stereoscopic viewing;
Fig. 4 shows a schematic representation of the series of views comprising a first portion for stereoscopic viewing and a second portion for pseudoscopic viewing;
Fig. 5 shows a schematic representation of the series of views comprising a first portion and a second portion according to the present invention;
Fig. 6a and Fig. 6b each show further examples of the series of views comprising a first portion and a second portion according to the present invention;
Fig. 7 shows a tablet device comprising the display processor according to the present invention and a 3D display;
Fig. 8 shows a method according to the present invention; and
Fig. 9 shows a computer readable medium comprising a computer program product according to the present invention.

### DETAILED DESCRIPTION OF EMBODIMENTS

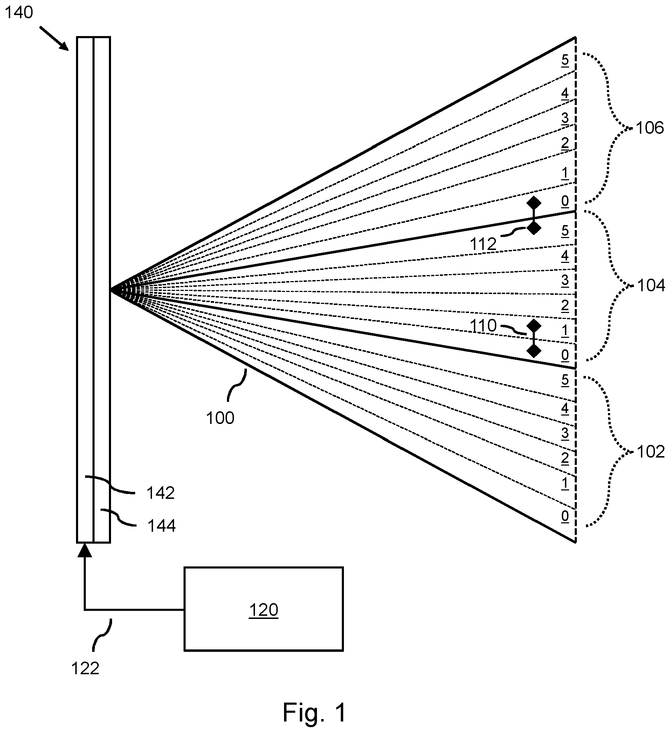

Fig. 1 shows a display processor 120 being connected to a 3D display 140 for providing a series of images 122 to the 3D display. The 3D display 140 is an autostereoscopic 3D display for enabling stereoscopic viewing of content displayed thereon without a need for the user to wear glasses. The 3D display 140 comprises a light generating portion 142 which is typically comprised of an array of light emitting or light modulating elements. For example, the light generating portion 142 may formed by a Liquid Crystal Display (LCD) panel and a backlight, as is known from the technical field of displays.

The 3D display 140 further comprises optical means 144 for redirecting light generated by the light generating portion 142 into different directions. The light generating portion 142 may be suitably arranged and cooperative with the optical means 144 such that a series of views 0-5 are emitted from the 3D display 140 in the form of a viewing cone 104. Moreover, the 3D display 140 may be arranged for, when being provided with a series of images 122, adjacently emitting said images in the series of views 0-5. Thus, the viewer will perceive, when viewing one of the series of views 0-5, a respective one of the series of images 122. The series of images 122 may correspond to a camera facing a scene comprised in 3D image data and moving from left to right in front of, and relative to, said scene. Hence, a viewer positioned 110 within the viewing cone 104 and perceiving two different ones 0, 1 of the series of views 0-5 may obtain stereoscopic viewing of said scene.

It is noted that 3D displays of the above configuration, and the manner of processing a series of images 122 for display as the series of views 0-5, are in itself known. For example, US 6,064,424 discloses an autostereoscopic display apparatus having lenticular elements as optical means 144 and discusses the relationship between display elements, i.e., light emitting or light modulating elements, and the lenticular elements. Also, autostereoscopic displays are known comprising parallax barriers as optical means 144.

Fig. 1 shows the viewing cone 104 being a central one of a series of repeated viewing cones 100, with each of the viewing cones 102, 104, 106 comprising the series of views 0-5. It is noted that the viewing cone 104 being repeated may be a desired as well as inherent property of the optical means 144 of the 3D display 140. The repeating of viewing cones is also discussed and elaborated in the aforementioned US 6,064,424.

The viewer is shown in Fig. 1 at two viewing positions. In a first viewing position 110, the viewer perceives a first view 0 with his left eye while perceiving a second view 1 with his right eye. Due to the aforementioned correspondence of the series of images 122 to a camera moving from left to right in front of, and relative to, said scene, the viewer will obtain stereoscopic viewing at the first viewing position 110. The first viewing position 110 is thus a stereoscopic viewing position 110. In a second viewing position 112, the viewer perceives a third view 5 with his left eye while perceiving a fourth view 0 with his right eye. The viewer will thus obtain pseudoscopic viewing at the second viewing position 112, i.e., said viewing position is a pseudoscopic viewing position 112. In this case, the third view 5 corresponds to a right-most view of the central viewing cone 104, and the fourth view 0 corresponds to a left-most view of the right viewing cone 106. As a consequence, an extraordinary large and reversed impression of depth is obtained at the second viewing position, i.e., said viewing position is an extra-pseudoscopic viewing position 112.

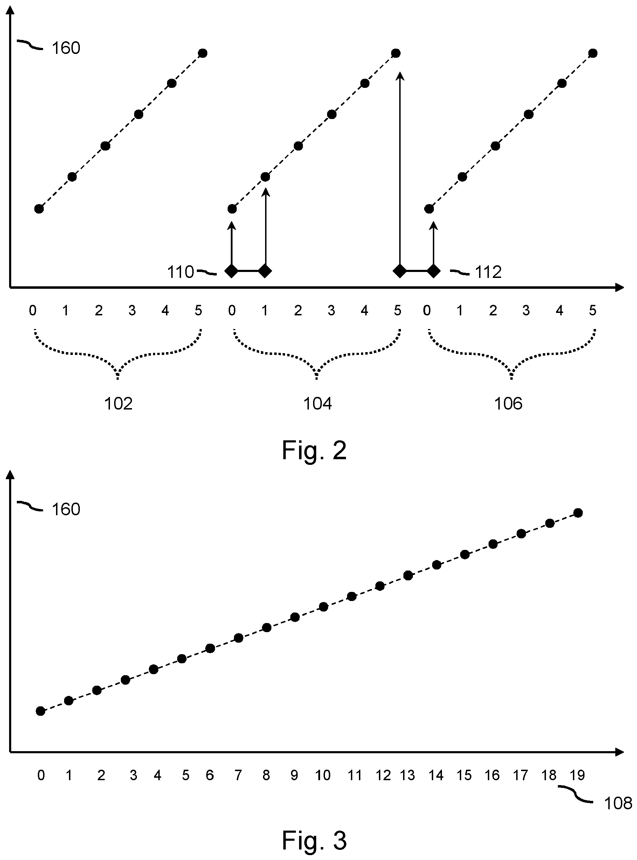

Fig. 2 shows a schematic representation of the series of views across each of the series of repeated viewing cones. The horizontal axis shows each of the series of views 0-5 for each of repeated viewing cones 102, 104, 106 in an order that corresponds to the viewer moving in parallel to the display surface of the 3D display 140 and from left to right in front of the 3D display 140, i.e., the viewer transversing through the series of views of the left viewing cone 102, the central viewing cone 104 and finally the right viewing cone 106. The vertical axis corresponds to the viewpoint 160 obtained by a viewer perceiving one of the series of views 0-5, the viewpoint 160 being with respect to the scene comprised in the 3D image data. Here, a low value, i.e., a low position on the vertical axis, corresponds to a left-hand viewpoint with respect to the scene, and a high value, i.e., a high position on the vertical axis, corresponds to a right-hand viewpoint with respect to the scene. Fig. 2 thus shows the viewpoint 160 changing from left to right with respect to the scene when the viewer transverses through the series of views 0-5 in the left viewing cone 102, the viewpoint then again jumping to left and changing to right when transversing through eh series of views 0-5 in the central viewing cone 104, etc. Also illustrated are the aforementioned stereoscopic viewing position 110 and the extra-pseudoscopic viewing position 112. It is clear from Fig. 2 that the viewer obtains, due to the large differences in viewpoint, an extraordinary large and reversed impression of depth at the extra-pseudoscopic viewing position 112.

Fig. 3 shows a schematic representation of another series of views 0-19. Here, the series of views 0-19 is depicted solely for a single viewing cone 108, i.e., none of the repeated viewing cones are shown for reasons of clarity. As opposed to the series of views 0-5 shown in Figs. 1 and 2, the series of views depicted in Fig. 3 is comprised of 20 views. The 3D display 140 may be arranged for emitting the series of views 0-19 as a series of fractional views. Here, the term *fractional* indicates that each one of the series of views 0-19 exhibits optical cross-talk with adjacent views, i.e., a viewer inherently perceives an overlapping of multiple ones of the series of views 0-19. The 3D display 140 may thus be a so-termed fractional view 3D display. It is noted that fractional view 3D displays, and the manner of processing a series of images 122 for display as the series of views 0-19, are in itself known. For example, WO 2006/117707 A2 discloses a stereoscopic display apparatus having a group of lenses as optical directory means, with a slant and a pitch of the lenses being chosen so as to provide said fractional views. The 3D display 140 may be a so-termed 20/3 display, with '20' indicating the number of fractional views emitted in each viewing cone, and '3' indicating the extend of the cross-talk between the fractional views. Here, the number '3' is to be interpreted as referring to a viewer, when viewing one of the fractional views, perceiving three of the fractional views in total. Hence, the optical cross-talk is such that in any given fractional view, two additional, neighboring, fractional views are visible.

It is noted that, of course, the 3D display 140 may also be of any other suitable configuration, i.e., a 5-view, 9-view, 20-view or any other number of view display. Moreover, the 3D display 140 may or may not be configured for generating the series of views 0-19 as a series of fractional views. In the following, however, the 3D display 140 is assumed to be configured as the aforementioned 20/3 fractional view 3D display.

Fig. 3 shows the series of views 0-19 corresponding to a monotonically increasing viewpoint 160, i.e., the viewpoint 160 monotonically increases between the first view 0 and the last view 19 in the series of views 0-19. As was the case with the series of views 0-5 shown in Figs. 1 and 2, a viewing position exists in between the viewing cone 108 and an adjacent viewing cone in which the viewer obtains extra-pseudoscopic viewing, i.e., perceives the first view 0 with his right eye and the last view 19 with his left eye, or vice versa. It is noted that due to the optical cross-talk, the viewer will additionally perceive the last view 19 and a second view 1 with his right eye, and the first view 0 and a next-to-last view 18 with his left eye. It is noted that the optical cross-talk causes a perception of blur. Consequently, the visual strain caused by the extraordinary large and reversed impression of depth at the extra-pseudoscopic viewing position is reduced. Nevertheless, significant visual strain remains due to the large magnitude of the depth perceived by the viewer.

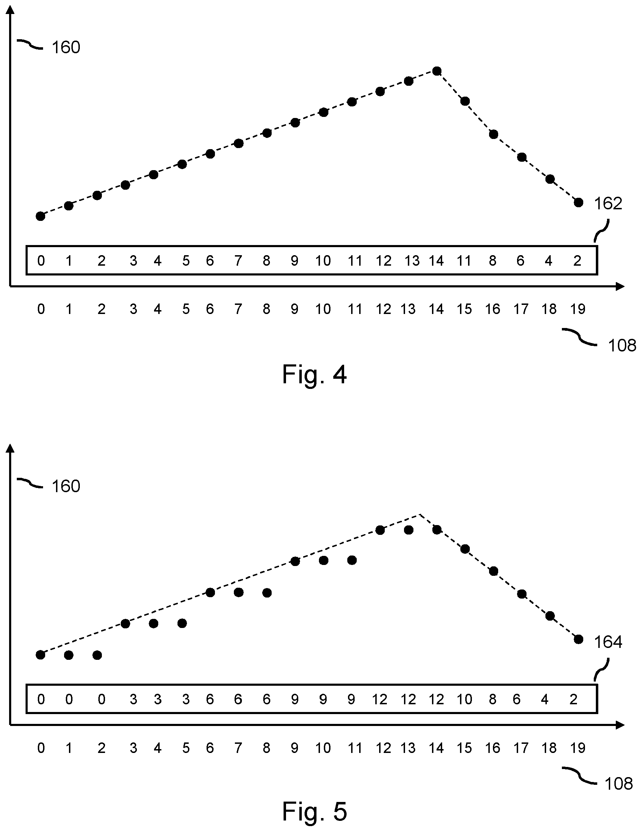

Fig. 4 shows the series of views 0-19 being adapted for reducing the visual strain caused by the extra-pseudoscopic viewing between adjacent viewing cones. In this Fig., the viewpoint 160 corresponding to each of the series of views 0-19 and as represented by the height of the dots on the vertical axis is additionally represented numerically by a series of viewpoints 162. It is noted that in the numerical representation, a low or lower number indicates a viewpoint 160 provided to the viewer that corresponds to a left-hand or more left-hand viewpoint 160 with respect to the scene, and a high or higher value corresponds to a right-hand or more right-hand viewpoint 160 with respect to the scene. Hence, the numerical representation serves to illustrate the relative differences in viewpoint 160 between the series of views 0-19, and is not an absolute measure.

Fig. 4 shows the series of views 0-19 comprising a first portion 0-14 in which stereoscopic viewing is provided, i.e., the viewpoint 160 increases monotonically from a viewpoint '0' at the first view 0 up until the viewpoint '14' at the last view 14 of the first portion 0-14. Moreover, the series of views 0-19 comprises a second portion 15-19 in which pseudoscopic viewing is provided, i.e., the viewpoint 160 decreases monotonically from the viewpoint '11' at the first view 15 to the viewpoint '2' at the last view 19 of the second portion 15-19. Hence, a viewer transversing through the series of views 0-19 in the viewing cone 108 will notice a stereoscopic viewing region and a pseudoscopic viewing region in the viewing cone 108. Moreover, the step in viewpoint 160 between each of the views in the second portion 15-19 is chosen to be such that the change in viewpoint 160 in the first portion 0-14 is substantially offset, i.e., a viewer transversing through the series of views 0-19 will obtain substantially the same viewpoint at the right hand side of the viewing cone 108 as at the left hand side of the viewing cone 108. In this case, the decrease in viewpoint in the second portion 15-19 is chosen to be, on average, approximately 2.5 times as large as the increase in viewpoint in the first portion 0-14 owing to the first portion 0-14 having approximately 2.5 times as many views.

It is noted that, compared to the series of views 0-19 provided in Fig. 3, the series of views 0-19 provided in Fig. 4 has a smaller stereoscopic viewing region, but also avoids any extra-pseudoscopic viewing positions between adjacent viewing cones owing to the introduction of a pseudoscopic viewing region between the stereoscopic viewing regions which provides a gradual transition from the left-most view of the stereoscopic viewing region to the right-most view of a stereoscopic viewing region in an adjacent viewing cone. Hence, although more viewing positions in the viewing cone 108 now provide pseudoscopic viewing, the extraordinary large and reversed impression of depth of Fig. 3 is avoided.

Fig. 5 shows the series of views 0-19 as provided in accordance with the present invention. Again, the series of views 0-19 comprises a first portion 0-14 in which stereoscopic viewing is provided, and a second portion 15-19 in which pseudoscopic viewing is provided. The second portion 15-19 is shown to be similar to that of Fig. 4, with only the first view 15 showing a viewpoint '10' instead of a viewpoint '11' as shown in Fig. 4. The first portion 0-14, however, now comprises repeated views, in that views 0, 1, 2 show a same viewpoint '0', views 3, 4, 5 show a same viewpoint '3', etc. Here, the term *repeated* refers to the viewpoints being the same, i.e., the views showing an identical image of the scene. It is visible that the overall slope of the viewpoints in the first portion 0-14 is substantially similar to that of Fig. 4, i.e., the first portion 0-14 provides an overall substantially similar transition in viewpoint 160, however, with a coarser step size. Owing to the 3D display 140 being, in this example, a 20/3 fractional view 3D display, a viewer will, on average, be less affected by the optical cross talk. For example, when perceiving view 4 of the series of views 0-19 depicted in Fig. 4, the viewer will additionally perceive views 3 and 5. Thus, the user will perceive a blend of viewpoints '3', '4' and '5'. In contrast, when perceiving view 4 of the series of views 0-19 depicted in Fig. 5, the viewer will additionally perceive repeats of the same viewpoint '3'. Hence, the viewer will not, or not significantly, perceive a blend of different viewpoints. A blend of different viewpoints typically results in an impression of blur, i.e., a loss of sharpness. By avoiding the blend of different viewpoints, no or less loss of sharpness occurs. It is noted that certain views provide a blend of different viewpoints, e.g., at view 5, the viewer will perceive a blend of viewpoints '3', '3' and '6'. Nevertheless, on average, the first portion 0-14 of Fig. 5 provides less blur, i.e., more sharpness, than the first portion 0-14 of Fig. 4. At the same time, the second portion 15-19 of Fig. 5 provides a similar amount of blur, i.e., a similar loss of sharpness, as the second portion 15-19 of Fig. 4, as both second portions do not comprise repeated views.

The repeating of the viewpoints of Fig. 5 may be obtained by the display processor 120 providing a first series of images to the 3D display 140 for being emitted as a first portion 0-14 of the series of views 0-19, with the display processor 120 being arranged for obtaining original images from the 3D image data and interpolating the original images for generating the first series of images comprising the original images and *X* interpolated images for each of the original images, with *X* being larger than zero, and for interpolating the original images using a zero-order interpolation technique. In the example of Fig. 5, *X* equals 2, i.e., for each of the original images corresponding to viewpoints '0', '3', '6', '9' and '12', two interpolated images are generated, resulting in the series of original images corresponding to a series of viewpoints "0, 3, 6, 9,12" and being interpolated for providing the first series of images corresponding to the series of viewpoints "0, 0, 0, 3, 3, 3, 6, 6, 6, 9, 9, 9, 12, 12, 12", respectively. Thus, the five original images are interpolated to obtain a first series of image comprising the five original images and ten interpolated images.

It is noted that obtaining the original images from the 3D image data may comprise performing a view rendering for obtaining images corresponding to the series of viewpoints "0, 3, 6, 9, 12", and that interpolating the original images using the zero-order interpolation technique may comprise simply repeating each of the original images twice.

The second portion 15-19 of Fig. 5 may be obtained by the display processor 120 by providing a second series of images to the 3D display 140 for being emitted as the second portion 15-19 of the series of views 0-19. Moreover, the display processor 120 may be arranged for obtaining further original images from the 3D image data and interpolating the further original images for generating the second series of images comprising the further original images and *Y* interpolated images for each of the further original images. In the example show in Fig. 5, *Y* is zero, i.e., no interpolated images are generated for each of the further original images. As a result, generating the series of views 0-19 for corresponding to the series of viewpoints 164 of Fig. 5 involves obtaining in total 9 original images, i.e., corresponding to the viewpoints "0", "3", "6", "9", "12", "10", "8", "4", "2". Consequently, the remaining 11 images within the series of views 0-19 are interpolated images.

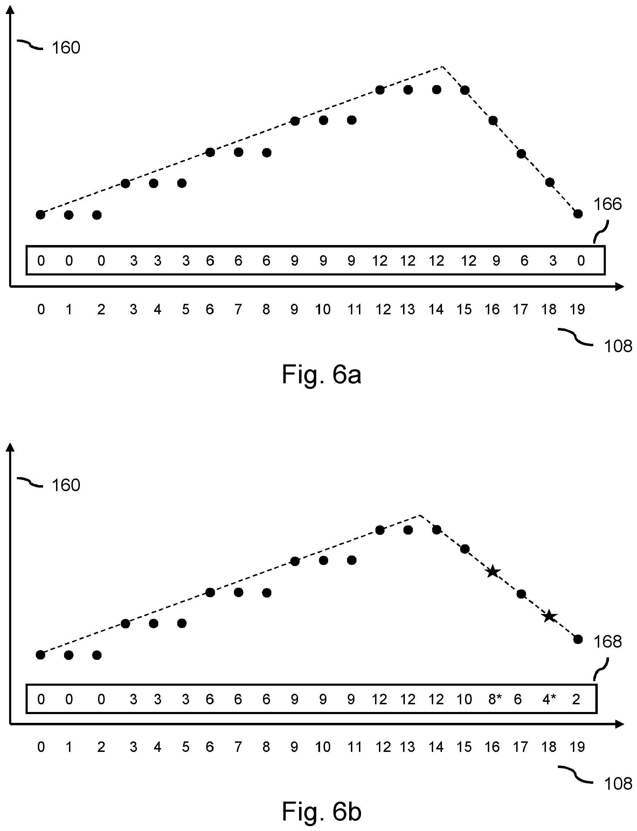

Fig. 6a shows another example of the series of views 0-19 in accordance with the present invention. Again, the series of views 0-19 comprises a first portion 0-14 in which stereoscopic viewing is provided, and a second portion 15-19 in which pseudoscopic viewing is provided. The first portion 0-14 is shown to be identical to that of Fig. 5. In this example, the display processor 120 may be arranged obtaining the further original images by selecting all or a subset of the original images. In this example, the second portion 15-19 is made up of images that correspond to the viewpoints '0', '3', '6', '9', '12', which therefore may all be obtained from the original images. As a result, generating the series of views 0-19 for corresponding to the series of viewpoints 166 of Fig. 6a involves obtaining in total 5 original images, i.e., corresponding to the viewpoints "0", "3", "6", "9", "12". Consequently, the remaining 15 images within the series of views 0-19 are interpolated images.

Similarly, the first series of images may be made up of images that correspond to the series of viewpoints "0, 0, 2, 2, 4, 4, 6, 6, 8, 8, 10, 10", and the second series of images may correspond to the series of viewpoints "8, 6, 4, 2, 0". In this example, the 3D display 140 may be a 17/2 fractional view 3D display. Similarly, the first series of images may be made up of images that correspond to the series of viewpoints "1, 1, 1, 4, 4, 4, 7, 7, 7, 10, 10, 10, 13, 13, 13, 16, 16, 16, 19, 19", and the second series of images may correspond to the series of viewpoints "17, 15, 13, 11, 9, 7, 5, 3". In this example, only a subset of the original images of the first series of images is used, i.e., solely the original image that corresponds to the viewpoint '7'. The 3D display 140 in this example may be a 28/3 fractional view 3D display.

Fig. 6b shows another example of the series of views 0-19 in accordance with the present invention. The first portion 0-14 is shown to be identical to that of Fig. 5. In this example, the display processor 120 may be arranged for interpolating the further original images using a first- or higher-order interpolation technique. For example, Y may equal 5/3, i.e., for each of the further original images, 5/3 interpolated images are generated. For example, the further original images may correspond to the viewpoints "10", "6" and "2". Here, the further original image corresponding to the viewpoint "6" may be obtained from the original images of the first portion 0-14, whereas those corresponding to the viewpoints "10" and "2" may be directly obtained from the 3D image data. A first- or higher-order interpolation technique may be used to interpolated said further original images to provide an intermediate image between the images corresponding to viewpoints '10' and '6', with the intermediate image corresponding to an interpolation between said viewpoints, yielding an interpolated viewpoint '8*'. Similarly, the first- or higher-order interpolation technique may be used to provide a further intermediate image between the images corresponding to viewpoints '6' and '2', with the further intermediate image corresponding to an interpolation between said viewpoints, yielding an interpolated viewpoint '4*'. Hence, a similar second portion 15-19 may be obtained as shown in Fig. 5, albeit with the second portion 15-19 being constituted by further original images and interpolated images, together forming a series of viewpoints 168 comprising, in the second portion 15-19, the viewpoints "10, 8*, 6, 4*, 2".

It is noted that first-order interpolation of the further original images may comprise performing a weighted averaging of the further original images. Higher-order interpolation may comprise analyzing trajectories of objects between the further original images, and interpolating the further original images to, as faithfully as possible, recreate the objects positioned along intermediate points in the trajectory. It is noted that such interpolation techniques are in itself known from the field of image processing, and in particular from the fields of view interpolation and frame rate conversion.

In general, the ratio of interpolation between *X* and *Y* may be, e.g., 1:0, i.e., the first series of images may be comprised half of original images and half of interpolated images, whereas the second series of views may be comprised entirely of further original images. Similarly, the ratio may be any of 2:0, 2:1, 3:0, 3:1, 3:2, 4:0, 4:1, 4:2 and 4:3 or any other suitable ratio. It is noted that the interpolation factors, and consequently also the ratio, do not need to be integer numbers. For example, when generating the first series of images by interpolating two interpolated images for each of the original images and generating the second series of images by interpolating 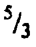 images for each of the further original images, a ratio of *X:Y* being 2: 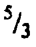 or approximately 2:1.67 is obtained.

It is noted that the X images may comprise interpolated, extrapolated or a combination of interpolated and extrapolated images. Similarly, the Y images may comprise interpolated, extrapolated or a combination of interpolated and extrapolated images. For example, in an alternative to the embodiment of which the result is shown in Fig. 6b, the viewpoints '8' and '4' may be directly obtained from the 3D image data. A first- or higher-order interpolation technique may be used to interpolate said further original images to provide an intermediate image corresponding to an interpolation between said viewpoints, yielding an interpolated viewpoint '6*'. Similarly, a first- or higher-order extrapolation technique may be used to provide further images next to the images corresponding to viewpoints '8' and '4', with the further images corresponding to an extrapolation of either viewpoints, yielding an extrapolated viewpoint '10*' and an extrapolated viewpoint '2*'. Hence, a similar second portion 15-19 may be obtained as shown in Fig. 5, albeit with the second portion 15-19 being constituted by further original images and a combination of interpolated and extrapolated images, together forming a series of viewpoints comprising, in the second portion 15-19, the viewpoints '10*, 8, 6*, 4,2*'.

The display processor 120 may be arranged for blurring the second series of images, for example by applying a spatial low-pass filter to individual ones of the second series of images, or by averaging multiple ones of the second series of images. Alternatively, or additionally, a depth-dependent blur may be applied, as is known from WO 2007/063477.

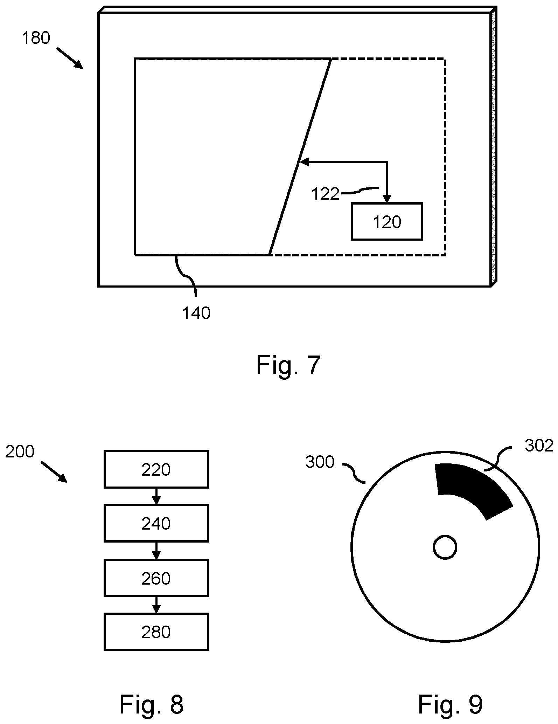

Fig. 7 shows a tablet device 180 comprising the display processor 120, i.e., the display processor is an internal component of the tablet device 180. The tablet device 180 further comprises the 3D display 140. The display processor 120 is shown to be connected to the 3D display 140 for providing the series of images 122. Alternatively, the display processor 120 may be comprised in a digital photo frame or smart phone. Said devices may also comprise the 3D display 140. Alternatively, the display processor 120 may be comprised in the 3D display 140, with the 3D display 140 constituting a separate or stand-alone device. Alternatively, the display processor 120 may be comprised in a set-top box, personal computer, gaming console or similar device that is connectable to the 3D display 140.

Fig. 8 shows a method 200 for processing three-dimensional [3D] image data for display on a 3D display, the 3D display being arranged for adjacently emitting, in each respective one of a series of repeated viewing cones, a series of views of the 3D image data, the series of views enabling stereoscopic viewing of the 3D image data at multiple viewing positions in each viewing cone. The method 200 comprises a first step 220, titled "PROVIDING A FIRST SERIES OF IMAGES", comprising providing a first series of images to the 3D display for being emitted as a first portion of the series of views to provide said stereoscopic viewing of the 3D image data at the multiple viewing positions in each viewing cone. The method 200 further comprises a second step 240, titled "PROVIDING A SECOND SERIES OF IMAGES", comprising providing a second series of images to the 3D display for being emitted as a second portion of the series of views to provide pseudoscopic viewing of the 3D image data at, at least, a further viewing position in each viewing cone, with the second portion adjoining the first portion in the series of views. The method 200 further comprises a third step 260, titled "GENERATING THE FIRST SERIES OF IMAGES", comprising obtaining original images from the 3D image data and interpolating the original images for generating the first series of images comprising the original images and *X* interpolated images for each of the original images, with *X* being larger than zero. The method 200 further comprises a fourth step 280, titled "GENERATING THE SECOND SERIES OF IMAGES", comprising obtaining further original images from the 3D image data and interpolating the further original images for generating the second series of images comprising the further original images and *Y* interpolated images for each of the further original images, with *Y* being larger than or equal to zero, and *Y* being smaller than *X*. It is noted that Fig. 7 is not to be understood as specifying the order in which the steps 220, 240, 260, 280 need to be performed. In particular, the third step 260 may be performed before the first step 220, and the fourth step 280 may be performed before the second step 240.

Fig. 9 shows a computer readable medium 300 comprising a computer program product 302 for causing a processor system to perform the method according to the present invention. The computer program product 302 may be comprised on the computer readable medium as a series of machine readable physical marks and/or as a series of elements having different electrical, e.g., magnetic, or optical properties or values.

It will be appreciated that the invention also applies to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing step of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a storage medium, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method. The integrated circuit may be a Application-specific integrated circuit (ASIC). The program may also embedded in the form of a firmware, i.e., as microcode stored in the ASIC, or separately for use by the ASIC.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. Display processor (120) for processing three-dimensional [3D] image data for display on a 3D display (140), the 3D display being arranged for adjacently emitting, in each respective one of a series of repeated viewing cones (100), a series of views (0-5, 0-19) of the 3D image data, the series of views enabling stereoscopic viewing of the 3D image data at multiple viewing positions (110) in each viewing cone (102, 104, 106, 108), and the display processor being arranged for:
- providing a stereoscopic series of images to the 3D display for being emitted as a first portion (0-14) of the series of views (0-19) to provide said stereoscopic viewing of the 3D image data at the multiple viewing positions in each viewing cone;
- providing a pseudoscopic series of images to the 3D display for being emitted as a second portion (15-19) of the series of views (0-19) to provide pseudoscopic viewing of the 3D image data at, at least, a further viewing position in each viewing cone, with the second portion adjoining the first portion in the series of views;
- generating the stereoscopic series of images by obtaining original images from the 3D image data and repeating images from the original images by interpolating in between the original images using zero-order interpolation and/or extrapolating next to the original images using zero-order extrapolation; and
- generating the pseudoscopic series of images by obtaining further original images from the 3D image data and including the further original images in said pseudoscopic series while not including repeated images.

2. Display processor (120) according to claim 1, wherein the display processor is arranged for obtaining the further original images by selecting all or a subset of the original images.

3. Display processor (120) according to claim 2, wherein the pseudoscopic series of images consists of all or the subset of the original images.

4. Display processor (120) according to any one of the above claims, wherein the display processor is arranged for blurring the pseudoscopic series of images.

5. Display processor (120) according to claim 4, wherein the display processor is arranged for blurring the pseudoscopic series of images by applying a spatial low-pass filter to individual ones of the pseudoscopic series of images, or by averaging multiple ones of the pseudoscopic series of images.

6. Display processor (120) according to any one of the above claims, wherein the first portion of the series of views and the second portion of the series of views together form the series of views.

7. 3D display (140) comprising the display processor (120) according to claim 1.

8. 3D display (140) according to claim 1, wherein the 3D display is arranged for emitting the series of views as a series of fractional views with each one of the series of fractional views exhibiting optical cross-talk with O adjacent fractional views.

9. 3D display (140) according to claim 8, wherein the display processor (120) is arranged for generating the stereoscopic series of images by generating *O* derived images for each of the original images using the zero-order interpolation technique.

10. 3D display (140) according to claim 8 or 9, wherein the stereoscopic series of images comprises *O*+*1* times the total number of images of the pseudoscopic series of images.

11. Tablet device (180), digital photo frame or smart phone comprising the display processor (120) according to any one of claims 1-8.

12. Method (200) for processing three-dimensional [3D] image data for display on a 3D display, the 3D display being arranged for adjacently emitting, in each respective one of a series of repeated viewing cones, a series of views of the 3D image data, the series of views enabling stereoscopic viewing of the 3D image data at multiple viewing positions in each viewing cone, and the method comprising:
- providing (220) a stereoscopic series of images to the 3D display for being emitted as a first portion of the series of views to provide said stereoscopic viewing of the 3D image data at the multiple viewing positions in each viewing cone;
- providing (240) a pseudoscopic series of images to the 3D display for being emitted as a second portion of the series of views to provide pseudoscopic viewing of the 3D image data at, at least, a further viewing position in each viewing cone, with the second portion adjoining the first portion in the series of views;
- generating the stereoscopic series of images by obtaining (260) original images from the 3D image data and repeating images from the original images by interpolating in between the original images using zero-order interpolation and/or extrapolating next to the original images using zero-order extrapolation; and
- generating the pseudoscopic series of images by obtaining (280) further original images from the 3D image data and including the further original images in said pseudoscopic series while not including repeated images.

13. Computer program product (302) comprising instructions for causing a processor system to perform the method according to claim 12.

## Patentansprüche

1. Ein Wiedergabeprozessor (120) zum Verarbeiten dreidimensionaler [3D] Bilddaten zur Wiedergabe auf einem 3D-Bildschirm (140), wobei der 3D-Bildschirm zum angrenzenden Ausstrahlen, in jedem einer Reihe wiederholter Betrachtungskegel (100), einer Reihe von Ansichten (0-5, 0-19) der 3D-Bilddaten angeordnet ist, wobei die Reihe von Ansichten eine stereoskopische Betrachtung der 3D-Bilddaten in mehreren Betrachtungspositionen (110) in jedem Betrachtungskegel (102, 104, 106, 108) ermöglicht, und der Wiedergabeprozessor angeordnet ist zum:
- Bereitstellen einer stereoskopischen Reihe von Bildern zur 3D-Wiedergabe, die als ein erster Teil (0-14) der Reihe von Ansichten (0-19) ausgestrahlt werden, um die stereoskopische Betrachtung der 3D-Bilddaten in den mehreren Betrachtungspositionen in jedem Betrachtungskegel bereitzustellen;
- Bereitstellen einer pseudoskopischen Reihe von Bildern zur 3D-Wiedergabe, die als ein zweiter Teil (15-19) der Reihe von Ansichten (0-19) ausgestrahlt wird, um die pseudoskopische Betrachtung der 3D-Bilddaten in zumindest einer weiteren Betrachtungsposition in jedem Betrachtungskegel bereitzustellen, wobei der zweite Teil an den ersten Teil in der Reihe von Ansichten anschließt;
- Generieren der stereoskopischen Reihe von Bildern durch Erhalten von Originalbildern aus den 3D-Bilddaten und sich wiederholenden Bildern aus den Originalbildern durch Interpolieren zwischen den Originalbildern unter Verwendung einer Interpolation nullter Ordnung und/oder Extrapolieren neben den Originalbildern unter Verwendung einer Extrapolation nullter Ordnung; und
- Generieren der pseudoskopischen Reihe von Bildern durch Erhalten weiterer Originalbilder aus den 3D-Bilddaten und Aufnehmen der weiteren Originalbilder in die pseudoskopische Reihe, während sich wiederholende Bilder nicht aufgenommen werden.

2. Der Wiedergabeprozessor (120) nach Anspruch 1, wobei der Wiedergabeprozessor zum Erhalten der weiteren Originalbilder durch Auswählen aller oder eines Teilsatzes der Originalbilder angeordnet ist.

3. Der Wiedergabeprozessor (120) nach Anspruch 2, wobei die pseudoskopische Reihe von Bildern aus allen oder dem Teilsatz der Originalbilder besteht.

4. Der Wiedergabeprozessor (120) nach einem der vorstehenden Ansprüche, wobei der Wiedergabeprozessor angeordnet ist, eine Unschärfe der pseudoskopischen Reihe von Bildern zu bewirken.

5. Der Wiedergabeprozessor (120) nach Anspruch 4, wobei der Wiedergabeprozessor angeordnet ist, die Unschärfe der pseudoskopischen Reihe von Bildern durch Anlegen eines räumlichen Tiefpassfilters an einzelne der pseudoskopischen Reihe von Bildern oder durch Durchschnittsbildung mehrerer der pseudoskopischen Reihe von Bildern zu bewirken.

6. Der Wiedergabeprozessor (120) nach einem der vorstehenden Ansprüche, wobei der erste Teil der Reihe von Ansichten und der zweite Teil der Reihe von Ansichten gemeinsam die Reihe von Ansichten bilden.

7. Ein 3D-Bildschirm (140), umfassend den Wiedergabeprozessor (120) nach Anspruch 1.

8. Der 3D-Bild-schirm (140) nach Anspruch 1, wobei der 3D-Bildschirm angeordnet ist, die Reihe von Ansichten als eine Reihe von Bruchteilansichten auszustrahlen, wobei jede der Reihe von Bruchteilansichten ein optisches nebensprechen mit O benachbarten Bruchteilansichten aufweist.

9. Der 3D-Bildschirm (140) nach Anspruch 8, wobei der Wiedergabeprozessor (120) zum Generieren der stereoskopischen Reihe von Bildern durch Generieren von O abgeleiteten Bildern für jedes der Originalbilder unter Verwendung der Interpolationstechnik nullter Ordnung angeordnet ist.

10. Der 3D-Bildschirm (140) nach Anspruch 8 oder 9, wobei die stereoskopische Reihe von Bildern das *O*+*1*-Fache der Gesamtanzahl von Bildern der pseudoskopischen Reihe von Bildern umfasst.

11. Eine Tablet-Vorrichtung (180), digitaler Fotorahmen oder Smartphone, umfassend den Wiedergabeprozessor (120) nach einem der Ansprüche 1-8.

12. Ein Verfahren (200) zum Verarbeiten dreidimensionaler [3D] Bilddaten zur Wiedergabe auf einem 3D-Bildschirm, wobei der 3D-Bildschirm zum angrenzenden Ausstrahlen, in jedem einer Reihe wiederholter Betrachtungskegel, einer Reihe von Ansichten der 3D-Bilddaten angeordnet ist, wobei die Reihe von Ansichten eine stereoskopische Betrachtung der 3D-Bilddaten in mehreren Betrachtungspositionen in jedem Betrachtungskegel ermöglicht, und das Verfahren umfassend:
- Bereitstellen (220) einer stereoskopischen Reihe von Bildern zur 3D-Wiedergabe, die als ein erster Teil der Reihe von Ansichten ausgestrahlt werden, um die stereoskopische Betrachtung der 3D-Bilddaten in den mehreren Betrachtungspositionen in jedem Betrachtungskegel bereitzustellen;
- Bereitstellen (240) einer pseudoskopischen Reihe von Bildern zur 3D-Wiedergabe, die als ein zweiter Teil der Reihe von Ansichten ausgestrahlt wird, um die pseudoskopische Betrachtung der 3D-Bilddaten in zumindest einer weiteren Betrachtungsposition in jedem Betrachtungskegel bereitzustellen, wobei der zweite Teil an den ersten Teil in der Reihe von Ansichten anschließt;
- Generieren der stereoskopischen Reihe von Bildern durch Erhalten (260) von Originalbildern aus den 3D-Bilddaten und Sich wiederholenden Bildern aus den Originalbildern durch Interpolieren zwischen den Originalbildern unter Verwendung einer Interpolation nullter Ordnung und/oder Extrapolieren neben den Originalbildern unter Verwendung einer Extrapolation nullter Ordnung; und
- Generieren der pseudoskopischen Reihe von Bildern durch Erhalten (280) weiterer Originalbilder aus den 3D-Bilddaten und Aufnehmen der weiteren Originalbilder in die pseudoskopische Reihe, während sich wiederholende Bilder nicht aufgenommen werden.

13. Ein Rechnerprogrammprodukt (302), umfassend Anweisungen, die ein Prozessorsystem veranlassen, das Verfahren nach Anspruch 12 durchzuführen.

## Revendications

1. Un processeur de reproduction (120) pour le traitement de données d'image tridimensionnelle [3D] pour la reproduction sur un écran 3D (140), l'écran 3D étant agencé pour émettre de manière adjacente, dans chaque respectif d'une série de cônes de visualisation répétés (100), une série de vues (0-5, 0-19) des données d'image 3D, la série de vues permettant une visualisation stéréoscopique des données d'image 3D au niveau de multiples positions de visualisation (110) dans chaque cône de visualisation (102, 104, 106, 108), et le processeur de reproduction étant agencé pour :
- fournir une série stéréoscopique d'images pour la reproduction 3D devant être émise en tant que première partie (0-14) de la série de vues (0-19) pour fournir ladite visualisation stéréoscopique des données d'image 3D au niveau des multiples positions de visualisation dans chaque cône de visualisation ;
- fournir une série pseudoscopique d'images pour la reproduction 3D devant être émise en tant que seconde partie (15-19) de la série de vues (0-19) pour fournir une visualisation pseudoscopique des données d'image 3D au niveau, au moins, d'une position de visualisation supplémentaire dans chaque cône de visualisation, avec la seconde partie contiguë à la première partie dans la série de vues ;
- générer la série stéréoscopique d'images en obtenant des images originales à partir des données d'image 3D et en répétant des images à partir des images originales par interpolation entre les images originales en utilisant une interpolation et/ou une extrapolation d'ordre zéro à côté des images originales en utilisant une extrapolation d'ordre zéro ; et
- générer la série pseudoscopique d'images en obtenant des images originales supplémentaires à partir des données d'image 3D et en incluant les images originales supplémentaires dans ladite série pseudoscopique tout en n'incluant pas les images répétées.

2. Le processeur de reproduction (120) selon la revendication 1, dans lequel le processeur de reproduction est agencé pour obtenir les images originales supplémentaires par sélection de la totalité ou d'un sous-ensemble des images originales.

3. Le processeur de reproduction (120) selon la revendication 2, dans lequel la série pseudoscopique d'images est constituée de la totalité ou du sous-ensemble des images originales.

4. Le processeur de reproduction (120) selon l'une quelconque des revendications précédentes, dans lequel le processeur de reproduction est agencé pour rendre floue la série pseudoscopique d'images.

5. Le processeur de reproduction (120) selon la revendication 4, dans lequel le processeur de reproduction est agencé pour rendre floue la série pseudoscopique d'images en appliquant un filtre passe-bas spatial à des individuelles de la série pseudoscopique d'images, ou en moyennant des multiples de la série pseudoscopique d'images.

6. Le processeur de reproduction (120) selon l'une quelconque des revendications précédentes, dans lequel la première partie de la série de vues et la seconde partie de la série de vues forment ensemble la série de vues.

7. Un écran 3D (140) comprenant le processeur de reproduction (120) selon la revendication 1.

8. L'écran 3D (140) selon la revendication 1, dans lequel l'écran 3D est agencé pour émettre la série de vues en tant que série de vues fractionnées avec chacune de la série de vues fractionnées présentant une interférence optique avec O vues fractionnées adjacentes.

9. L'écran 3D (140) selon la revendication 8, dans lequel le processeur de reproduction (120) est agencé pour générer la série stéréoscopique d'images en générant O images dérivées pour chacune des images originales en utilisant la technique d'interpolation d'ordre zéro.

10. L'écran 3D (140) selon la revendication 8 ou 9, dans lequel la série stéréoscopique d'images comprises *O*+*1* fois le nombre total d'images de la série pseudoscopique d'images.

11. Un dispositif de tablette (180), cadre de photo numérique ou téléphone intelligent comprenant le processeur de reproduction (120) selon l'une quelconque des revendications 1 à 8.

12. Un procédé (200) pour le traitement de données d'image tridimensionnelle [3D] pour la reproduction sur un écran 3D, l'écran 3D étant agencé pour émettre de manière adjacente, dans chaque respectif d'une série de cônes de visualisation répétés, une série de vues des données d'image 3D, la série de vues permettant une visualisation stéréoscopique des données d'image 3D au niveau de multiples positions de visualisation dans chaque cône de visualisation, et le procédé comprenant :
- la fourniture (220) d'une série stéréoscopique d'images pour la reproduction 3D devant être émise en tant que première partie de la série de vues pour fournir ladite visualisation stéréoscopique des données d'image 3D au niveau des multiples positions de visualisation dans chaque cône de visualisation ;
- la fourniture (240) d'une série pseudoscopique d'images pour la reproduction 3D devant être émise en tant que seconde partie de la série de vues pour fournir une visualisation pseudoscopique des données d'image 3D au niveau, au moins, d'une position de visualisation supplémentaire dans chaque cône de visualisation, avec la seconde partie contiguë à la première partie dans la série de vues ;
- la génération de la série stéréoscopique d'images en obtenant (260) des images originales à partir des données d'image 3D et en répétant des images à partir des images originales par interpolation entre les images originales en utilisant une interpolation et/ou une extrapolation d'ordre zéro à côté des images originales en utilisant une extrapolation d'ordre zéro ; et
- la génération de la série pseudoscopique d'images en obtenant (280) des images originales supplémentaires à partir des données d'image 3D et en incluant les images originales supplémentaires dans ladite série pseudoscopique tout en n'incluant pas les images répétées.

13. Un produit de programme informatique (302) comprenant des instructions pour amener un système de processeur à réaliser le procédé selon la revendication 12.
